# EUROPÄISCHE PATENTSCHRIFT

(11) **EP 0 967 172 B1**
(45) Veröffentlichungstag und Bekanntmachung des Hinweises auf die Patenterteilung: **06.11.2002**
(21) Anmeldenummer: 99250203.9
(22) Anmeldetag: 22.06.1999
(51) Int. Cl.: B66C 23/00, B25J 19/00

(54) **Handhabungsgerät mit Balancier-Hebeeinrichtung**
Manipulator comprising a balancing device
Manipulateur avec dispositif d'équilibrage

(30) Priorität: 25.06.1998 US 104956
(43) Veröffentlichungstag der Anmeldung: 29.12.1999
(73) Patentinhaber: Demag Cranes & Components GmbH, 58300 Wetter (DE)
(72) Erfinder: Tranchida, Joseph G., St-Claire, Michigan 48079 (US)
(74) Vertreter: Meissner, Peter E., Dipl.-Ing.

(56) Entgegenhaltungen:
- US-A- 4 591 122
- US-A- 5 037 267

## Beschreibung

Die Erfindung betrifft ein Handhabungsgerät gemäß dem Oberbegriff des Anspruchs 1.

Im allgemeinen werden Handhabungsgeräte mit einer Balancier-Hebeeinrichtung von Bedienpersonen zur Handhabung von beispielsweise schweren pneumatischen Werkzeugen als auch in Montagelinien für die Plazierung von zu montierenden Teilen benutzt. Typische Balancier-Hebeeinrichtungen weisen einen Auslegerarm auf, der zweiteilig mit einem scharnierartiges Gelenk ausgebildet und an einem Mast befestigt ist. Der Auslegerarm ist in einer vertikalen Ebene schwenkbar und um eine parallel zur Mastlängsachse versetzte Achse drehbar. Die Balancier-Hebeeinrichtung sorgt für eine Kompensation der Gewichtskräfte am Auslegerarm.

Aus dem US-Patent 5,037,267 ist eine derartige manuell bewegbare Balancier-Hebeeinrichtung bekannt.

Eine Schwierigkeit bei Balancier-Hebeeinrichtungen, die nur für die Handbetätigung ausgelegt sind, ist der relativ hohe Zeit- und Energieaufwand. So benutzt eine Bedienperson zur Plazierung eines Autositzes in einer Autokarosserie anfangs beispielsweise die das Gewicht des Sitzes aufnehmende Hebeeinrichtung zur Aufnahme des Autositzes von einer Lagerstation oder Aufnahmeposition. Dann bewegt die Bedienperson die Hebeeinrichtung mit dem Sitz von der Versorgungslinie neben die Montagelinie. Die Bedienperson benutzt dann die Hebeeinrichtung, um den Sitz innerhalb der die Montagelinie entlang kommenden Autokarosserie zu plazieren. Um dies bei der nächsten Autokarosserie zu wiederholen, bewegt die Bedienperson die Hebeeinrichtung zurück zur Versorgungslinie neben den nächsten aufzunehmenden Sitz und so weiter.

Zeit- und Energieaufwand lassen sich verringern, wenn sich die Hebeeinrichtung zwischen der Aufnahmeposition und der Einbauposition selbsttätig bewegt. An der Einbauposition braucht die Bedienperson die Balancier-Hebeeinrichtung mit dem Montageteil, also z.B. dem Sitz, dann nur noch zu übernehmen und manuell an die vorgesehene Stelle zu bewegen, um das Montageteil einzubauen.

Es ist die Aufgabe der Erfindung, ein Handhabungsgerät mit Balancier-Hebeeinrichtung für eine selbsttätige und manuelle Arbeitsweise zur Verfügung zu stellen.

Eine weitere Aufgabe der Erfindung ist es, eine selbsttätige Bewegung des Handhabungsgeräts zwischen vorgegebenen Positionen sicherzustellen.

Weiter ist es die Aufgabe der Erfindung, das selbsttätige Anfahren von Positionen mit unterschiedlichen Höhen, Winkeln und Verschiebungen zu ermöglichen.

Die Lösung der Aufgabe ist durch die im Anspruch 1 angegebenen Merkmale gegeben. Durch die kennzeichnenden Merkmale der Unteransprüche 1 - 12 ist das Handhabungsgerät in vorteilhafter Weise weiter ausgestaltet.

Die Lösung sieht vor, daß jedes zur Positionierung vorgesehene bewegbare Element mittels mindestens eines mit diesen verbindbaren, von einer Steuereinheit betätigbaren Stellgliedes selbsttätig zu einer jeweils vorgegebenen Position bewegbar und die kraftübertragende Verbindung zwischen dem Stellglied und dem bewegbaren Element nach Erreichen der jeweils vorgegebenen Position zum manuellen Bewegen des Handhabungsgeräts wieder lösbar ist. Der Kern der Erfindung besteht also darin, von einer Steuereinheit betätigbare Stellglieder zum Bewegen von bewegbaren Elementen, beispielsweise eines Auslegerarms, vorzusehen, die von der Steuereinheit anschließend wieder freigegeben werden. Hierzu ist die kraftübertragende Verbindung zwischen dem Stellglied und dem bewegbaren Element lösbar auszubilden ist. Neben dem Auslegerarm ist ein längsverschiebbarer Lastarm sowie ein mittels einer Drehlagerung um seine Längsachse drehbarer Mast als bewegbares Element vorgesehen. Die Lösung der Verbindung erfolgt vorteilhafterweise jeweils durch die Steuereinheit.

Ein insbesondere für den Auslegerarm geeignetes Stellglied ist eine gleichstrombetriebene Kugelumlaufspindel ohne Selbsthemmung, die auf einfache Art und Weise, beispielsweise durch Trennung von der Stromversorgung, von der Steuereinheit freigebbar ist. Im freigegebenen Zustand ist die Spindel dann nahezu ohne manuellen Kraftaufwand in der dazugehörigen Mutter aufgrund der sehr geringen Rollreibung leichtgängig längsverschiebbar, so daß der ausbalancierte Auslegerarm manuell bewegbar ist.

Um auch die oben erwähnten Reibungswiderstände zu vermeiden, wird eine vollständige Lösung der Stellglied- Auslegerarm-Verbindung bei Handbetrieb vorgeschlagen.

Ein Ausführungsbeispiel der Erfindung ist in der Zeichnung dargestellt und wird nachfolgend näher beschrieben. Es zeigen:
- Fig. 1: eine perspektivische Darstellung eines Handhabungsgeräts,
- Fig. 2: eine Seitenansicht der Balancier-Hebeeineinrichtung des Handhabungsgeräts gemäß Fig. 1,
- Fig. 3: eine Seitenansicht gemäß Fig. 2 mit eingefahrenem und ausgefahrenem Auslegerarm,
- Fig. 4: einen vergrößerten Ausschnitt der Verbindung zwischen der Kolben-Zylinder-Einheit und dem Stellglied des Auslegerarms gemäß Fig. 2,
- Fig. 5: eine Ansicht in Richtung der Sichtlinien 5 - 5 gemäß Fig. 4,
- Fig. 6: eine Ansicht mit Tragarm in eingefahrener Position,
- Fig. 7: eine Ansicht mit Tragarm in ausgefahrener Position,
- Fig. 8: einen vergrößerten Ausschnitt des markierten Bereichs 8 gemäß Fig. 2,
- Fig. 9: eine Draufsicht auf das Handhabungsgerät gemäß Fig. 1 und
- Fig. 10: ein Schnitt des Handhabungsgeräts entlang der Schnittlinie 10-10 gemäß Fig. 9.

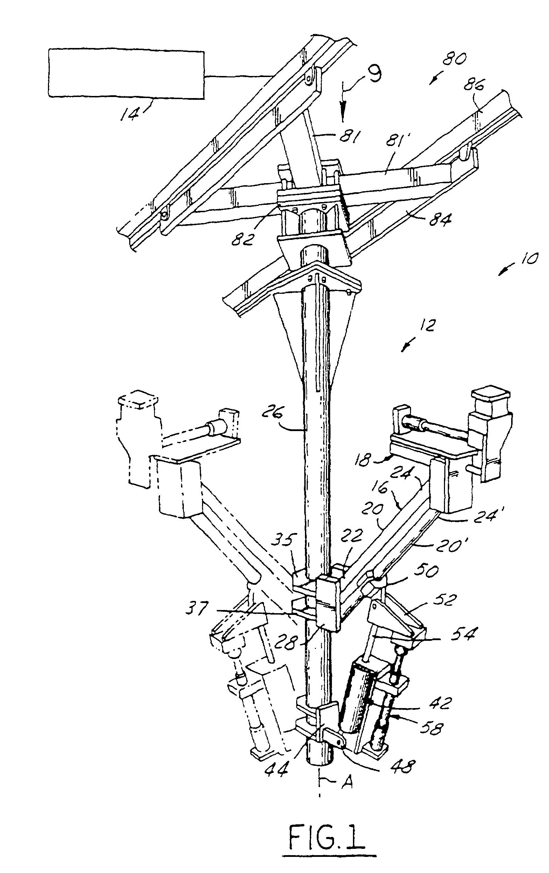

Fig. 1 zeigt eine räumliche Darstellung eines an zwei oberen Fahrschienen 86 verfahrbaren Handhabungsgeräts 10 mit einem um seine vertikale Längsachse A drehbaren Mast 26, an dem ein um eine waagerechte Achse (Achsen 27, 29) schwenkbarer Auslegerarm 16 als ein erstes bewegbares Element zum Bewegen eines Aufnahmemittels (Gabel 95) mit oder ohne Last zu einer gewünschten vertikalen Position abgestützt ist. Zum Kompensieren von Eigengewichts- und Lastmomenten ist zwischen dem Mast 26 und dem Auslegerarm 16 eine Balancier-Hebeeineinrichtung 12 vorgesehen.

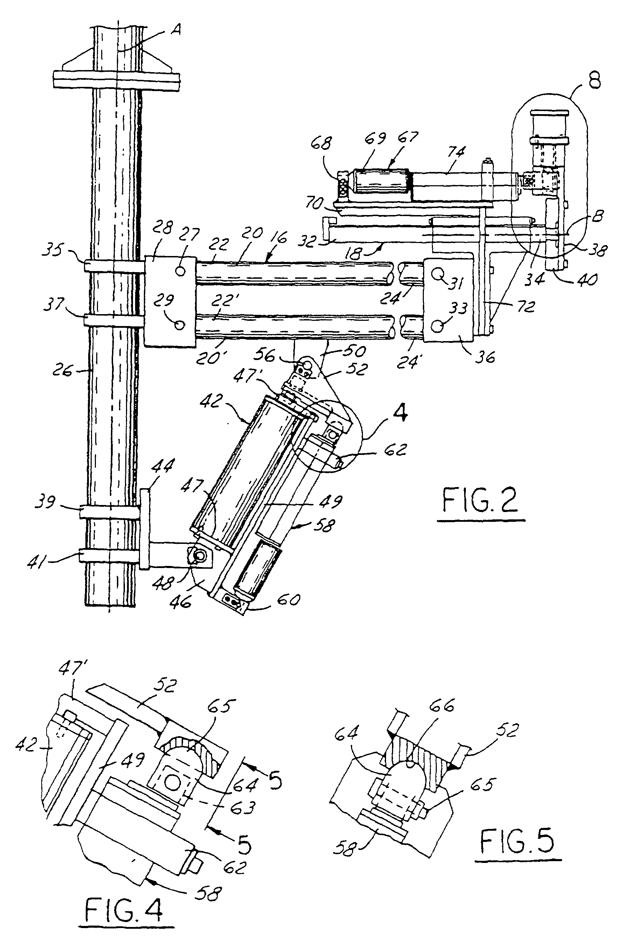

Fig. 2 zeigt die Balancier-Hebeeineinrichtung 12 des Handhabungsgeräts 10 gemäß Fig. 1 in einer detaillierten Darstellung. Der Auslegerarm 16 wird aus einem Parallelogrammgestänge mit zwei parallel zueinander angeordneten Stäben 20, 20' gebildet, deren Enden 22 und 22' um die waagerechten Achsen 27, 29 schwenkbar an einem ersten Befestigungselement 28 befestigt sind. Die beiden anderen Enden 24 und 24' der beiden Stäbe 20, 20' sind an einem zweiten Befestigungselement 36 schwenkbar um Achsen 31 bzw. 33 angeordnet. Das Befestigungselement 28 ist mittels Klemmen 35, 37 am Mast 26 befestigt.

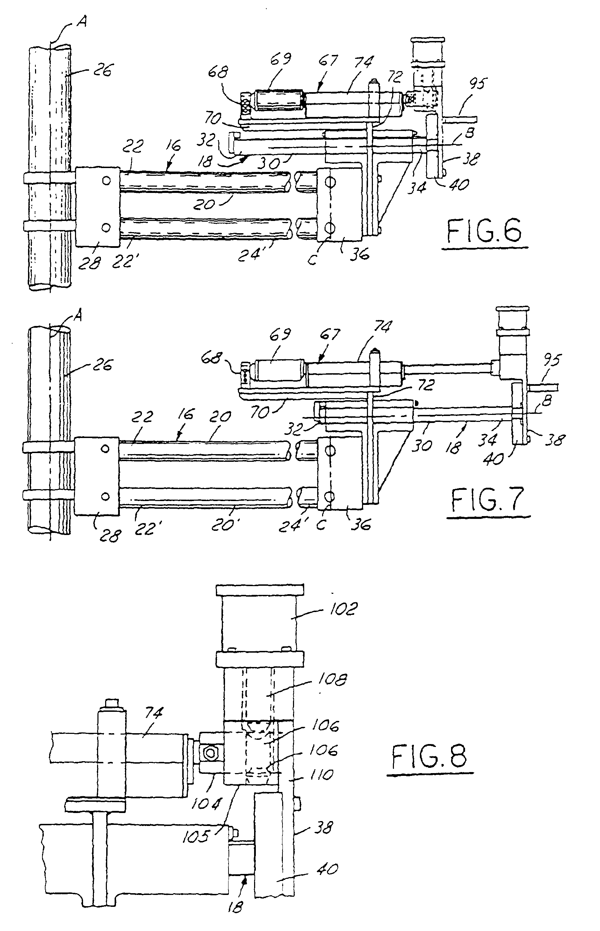

Als Verlängerung des Auslegerarms 16 ist an diesem ein längsverschiebbarer Tragarm 18 als zweites bewegbares Element drehfest an diesem abgestützt. Hierzu weist der Tragarm 18 ein in Richtung seiner Längsachse B senkrecht zur Achse A verlaufendes ausfahrbares Längselement mit zwei Enden 32, 34 auf, wobei an dem entfernteren Ende 40 eine Halterung 38 mit einer Gabel 95 (Fig. 6 und 7) als Mittel zur Aufnahme (Lastaufnahmemittel) von Werkzeugen, Montageteilen usw. befestigbar ist.

Das zweite Befestigungselement 36 hat eine axiale Ausrichtung entlang der vertikalen Linie C, die im wesentlichen parallel zur vertikalen Achse A des Masts 26 verläuft, und behält diese axiale Orientierung aufgrund des Parallelogrammgestänges stets bei, auch wenn der Auslegerarm 16 in einer vertikalen Ebene verschwenkt wird.

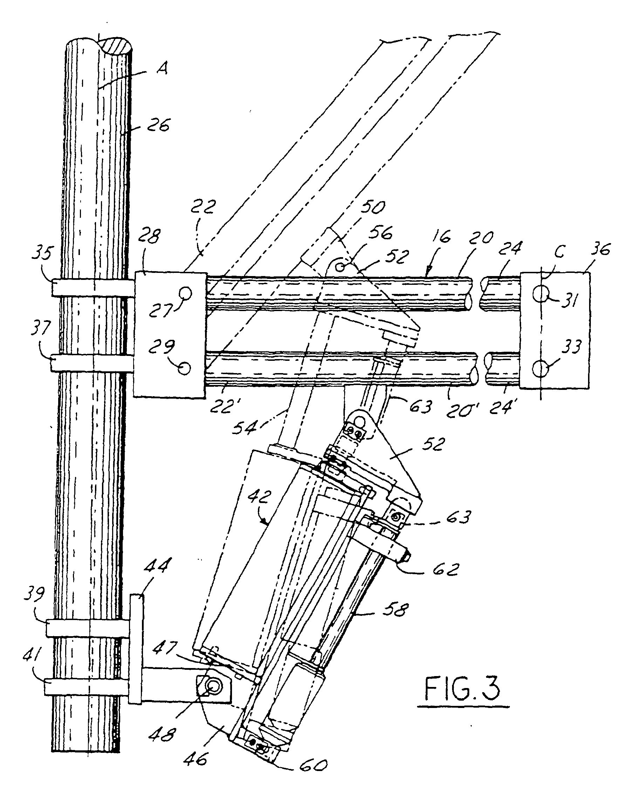

Fig. 1 - 5 zeigen eine Balanciereinheit 42, die als pneumatische Kolben-Zylinder-Einheit ausgebildet ist. Diese ist zwischen dem Mast 26 und dem Auslegerarm 16 angeordnet und so an diesen beiden drehbar befestigt, daß die Enden 24, 24' des Auslegerarms 16 mittels der Kolbenstange 54 der Balanciereinheit 42 nach oben und unten bewegbar sind. Hierzu ist die Kolben-Zylinder-Einheit mit einem Ende 47 an einem Tragelement 46 befestigt, das mit einem L-förmigen dritten Befestigungselement 44 eine Gelenkverbindung mit einer horizontalen Drehachse 48 bildet. Mittels Klemmen 39, 41 ist das dritte Befestigungselement 44 unterhalb des Auslegerarms 16 am Mast 26 befestigt. Die Balanciereinheit 42 ist somit gegenüber dem Mast 26 jeweils in einer vertikalen Ebene um die Achse 48 schwenkbar. Das anderen Ende der Kolben-Zylinder-Einheit ist - wie in Fig. 4 gezeigt - analog über ein Verbindungselement 47' fest mit einem Tragelement 52 und über eine Achse 56 gelenkig mit dem Auslegerarm 16 verbunden.

Die Balanciereinheit 42 weist eine Drucksteuerung auf, die im Zylinder in bekannter Weise selbsttätig einen konstanten Druck zum Gewichtsausgleich aufrechterhält und dabei auch eine Druckanpassung an Gewichtsschwankungen vornimmt.

Beim Anheben erzeugt die Balanciereinheit 42 jeweils eine vertikal nach oben gerichtete Kraft zum Kompensieren von Eigengewichts- und Lastmomenten der beiden Arme 16, 18 und der Last, so daß diese in jedem Moment vollständig ausbalanciert sind. Dies gilt auch während der Aufwärts- und der Abwärtsbewegung. Dadurch kann eine Bedienperson eine an der Halterung 38 befestigte Last mit relativ geringem Kraftaufwand manuell in jede gewünschte Position bewegen.

Der Tragarm 18 ist entlang der Längsachse B in seiner Länge einstellbar. Die Parallelogrammgestänge-Anordnung des Auslegerarms 16 mit den beiden parallel zueinander angeordneten Elementen 20, 20' übertragen die Ausbalancierkraft auf den Tragarm 18. Die veränderlichen Kraftmomente bei einer Längenänderung des Tragarms 18 werden aber über das zweite Befestigungselement 36 und die beiden parallel zueinander angeordneten Elemente 20, 20' auf das erste Befestigungselement 28 und nicht auf die Balanciereinheit 42 übertragen. Demzufolge sind nur die Reibungskräfte innerhalb der Balancier-Hebeeineinrichtung 12 zu überwinden, um die Last anzuheben oder abzusenken. Diese Kraft ist unabhängig davon, wie weit der Tragarm 18 ein- oder ausgefahren ist.

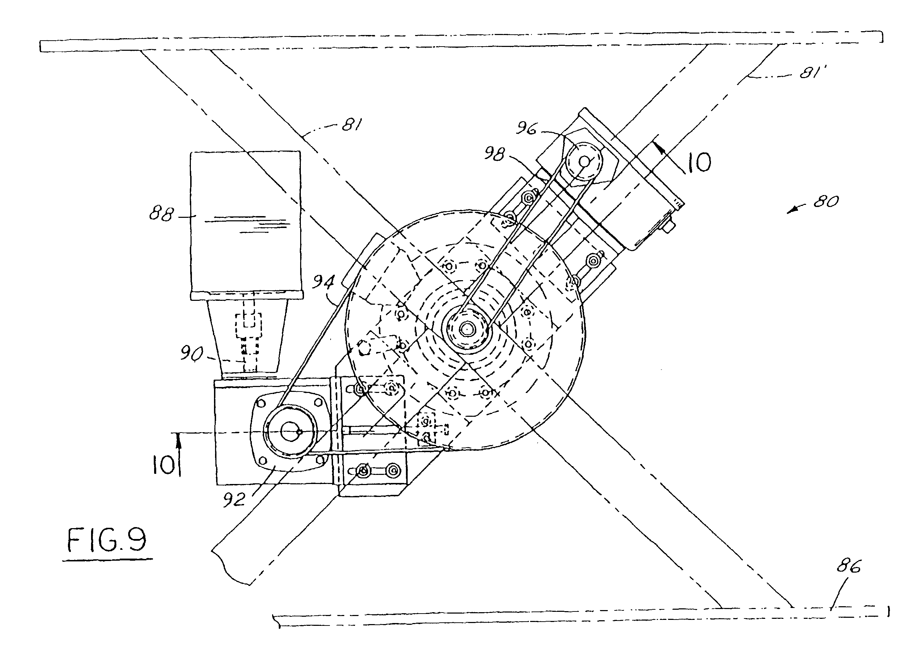

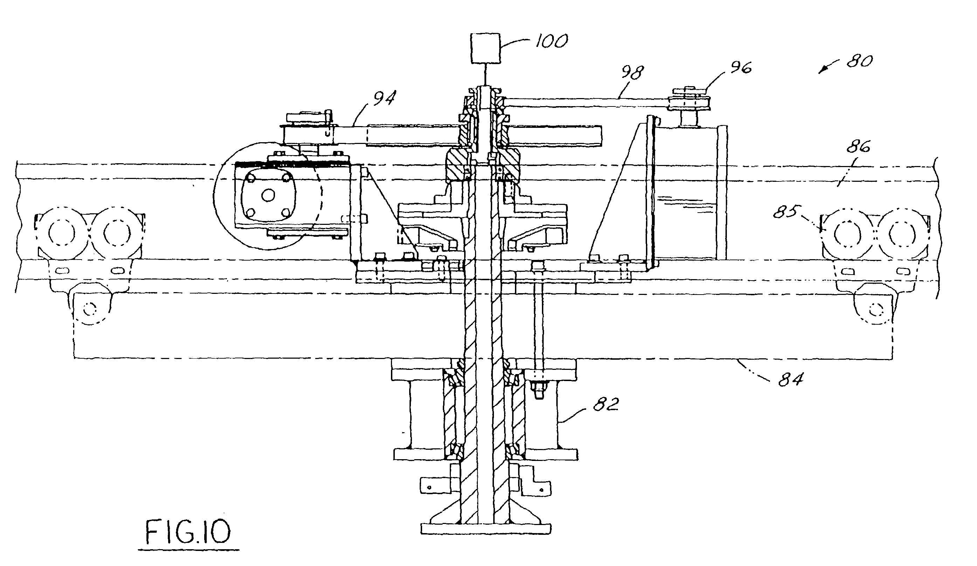

Den Fig. 1, 9 und 10 entnimmt man, daß für die Drehbewegung des Masts 26 um die vertikale Achse A eine Basis 80 mit Querelementen 81 und 81' und mit einem Tragelement 82 vorgesehen sind. Vorzugsweise ist die Basis 80 eine Laufkatze 84 mit Rädern 85, welche sich an Schienen 86 einer Hängebahnkrananlage abstützen. Ein Motor kann als Antrieb mit den Rädern 85 verbunden und eine optionale Bremse an der Basis 80 vorgesehen sein, um die Drehbewegung des Masts 26 definiert abbremsen zu können, insbesondere wenn große Lasten gedreht werden müssen. Ein Stopelement zur Begrenzung des Drehwinkels kann ebenfalls an der Basis 80 des Masts 26 angeordnet sein.

Zum Drehen des Masts 26 und damit zum horizontalen Drehen des Auslegerarms 16 ist ein an der Basis 80 angeordneter Motor 88 über eine Motorwelle 90 und eine Kupplung mit einem Schneckengetriebe 92 zusammengeschaltet. Das Schneckengetriebe 92 umfaßt einen Riementrieb, welcher einen Riemen 94 zur Drehung des Masts 26 antreibt.

Das Handhabungsgerät 10 ist in den Betriebsarten Handbetrieb und Automatikbetrieb betreibbar.

Bei Automatikbetrieb übernimmt eine als programmierbare logische Steuerung PLC (programable logic controller) ausgebildete Steuereinheit 14 die Bewegung der bewegbaren Elemente 16, 18, 26, also der beiden Arme 16, 18 und des Masts 26, von einer vorgegebenen oder der aktuellen Position X, Y und Z zu einer vorgegebenen Position X', Y' und Z'. Die Balanciereinheit 42 ist bei Automatikbetrieb ausgeschaltet, z.B. von der Steuereinheit 14.

Für den Auslegerarm 16 ist hierzu ein sich parallel zum Kolben (Kolbenstange 54) der Balanciereinheit 42 zwischen den Enden 22, 22' und 24, 24' erstreckendes erstes lineares Stellglied 58 vorgesehen. Es bewirkt ein Verschwenken des Auslegerarms 16, so daß sich der Auslegerarm 16 und folglich eine vom Tragarm 18 abgestützte Last selbsttätig in eine vorgegebene vertikale Position bewegen läßt.

Das Stellglied 58 ist eine gleichstrom(motor)angetriebene Kugelumlaufspindel, welche an den Stellen 60 und 62 am Tragelement 46 befestigt ist. Die linear bewegbare Spindel 63 des linearen Stellglieds 58 und der Kolben (Kolbenstange 54) der Balanciereinheit 42 sind mit dem Tragelement 52 verbunden. Das Ausfahren der Spindel 63 bei Betätigung des Stellglieds 58 bewirkt dadurch eine entsprechende Bewegung des Kolbens und damit des Auslegerarms 16. Die Steuereinrichtung 14 betätigt das Stellglied 58 so, daß die Spindel 63 aus einer Bereitschaftsposition in eine gewünschte vorgegebene Position fährt und der Auslegerarm 16 entsprechend nach oben oder unten verschwenkt. Somit kann ein am Halterung 38 befestigtes Teil mittels der Steuereinrichtung 14 selbsttätig von einer vertikalen Positionen in eine andere bewegt werden.

Die Verbindung zwischen der Spindel 63 und dem Kolben 54 ist lösbar ausgebildet.

So kann im einfachsten Fall die Spindel 63 drehbar am Tragelement 52 befestigt und die Leistungsbeaufschlagung des Gleichstrommotors der Kugelumlaufspindel abschaltbar sein, so daß der abgeschaltete Gleichstrommotor frei durchdrehbar ist. Damit ist auch die Spindel 63 der nahezu keinen Reibungs-Widerstand aufweisenden Kugelumlaufspindel leicht verschiebbar, so daß der Auslegerarm 16 bei Handbetrieb manuell auf und ab bewegbar ist, nahezu unbeeinflußt vom Stellglied 58. Diese Variante weist allerdings Reibungskräfte auf, die beim Handbetrieb zusätzlich zu überwinden sind.

Eine andere verbesserte Variante ist in den Figuren dargestellt, wo die Spindel 63 an einem Ende eine Nase 64 mit einer in Spindellängsrichtung weisenden Halbkugel 65 aufweist (Fig. 4). Die Nase 64 greift drehbeweglich in eine komplementäre Aufnahme 66 des Tragelements 52 ein, wie in Fig. 5 gezeigt. Die Nase 64 und die Aufnahme 66 stellen ein lösbare Verbindung zwischen dem Stellglied 58 und dem ersten Auslegerarm 16 her. Bei Automatikbetrieb kann der Auslegerarm 16 durch das Stellglied 58 angehoben werden. Die bei Automatikbetrieb ausgeschaltete Balanciereinheit 42 erzeugt keine Kompensationskraft mehr, so daß der Auslegerarm 16 bei Zurückfahren der Spindel 63 langsam nach unten driftet, also der Spindel 63 folgt, bis die Nase 64 jeweils in der Aufnahme 66 zur Anlage kommt.

Um den Tragarm 18 im Automatikbetrieb selbsttätig ein- und auszufahren, ist als von der Steuereinrichtung 14 steuerbares Betätigungsmittel wieder ein elektrisch betriebenes zweites lineares Stellglied 67 vorgesehen. Das Stellglied 67 ist wiederum eine als Kugelumlaufspindel ausgebildete Spindel 74, die von einem Gleichstrommotor 69 angetrieben wird und an einem fünften Befestigungselement 68 befestigt ist. Das Befestigungselement 68 ist Teil einer Abstützung 70, zu der auch das lineare Stellglied 67 gehört. Ein Tragelement 72 verbindet die Abstützung 70, das fünfte Tragelement 68 und den lineare Stellglied 67 mit dem Tragelement 36 des Auslegerarms 16.

Demzufolge bewirkt eine Betätigung des Stellglieds 67 mittels der Steuereinheit 14, welche die Spindel 74 verschiebt, daß der Tragarm 18 mit dem Halterung 38 sich entsprechend bewegt. Hierbei wird der Tragarm 18 aus- oder eingefahren und damit kontrolliert in eine vorgegebene longitudinale Position gebracht.

Die Verbindung zwischen der Spindel 67 und dem Tragarm 18 ist wie bei der Spindel 63 und dem Kolben 54 lösbar ausgebildet. Im einfachsten Fall wird hierzu der Gleichstrommotors 69 abgeschaltet.

Fig. 8 zeigt eine andere Variante der lösbaren Verbindung, bei der die Spindel 74 mit einem Halteelement 104 verbunden ist, das formschlüssig in eine Öffnung eines Blockteils 105 paßt und eine Nut 106 aufweist. An dem Blockteil 105 befindet sich ein Zylinder 102. Ein Halteelement 110 verbindet die Spindel 74, den Zylinder 102 und das Blockteil 105 mit dem entfernten Ende 40 des Tragarms 18.

Der Zylinder 102 weist einen druckbeaufschlagten Stab 108 auf, welcher bei Automatikbetrieb in die Aufnahme des Blockteils 105 in die Nut 106 eingreift und auf diese Weise eine formschlüssige Verbindung herstellt. Bei Verschiebung der Spindel 74 folgen der Zylinder 102, das Blockteil 105 und das Halteelement 109 sowie der Tragarm 18 dann jeweils ihrer Bewegung.

Im Handbetrieb ist die Verbindung gelöst, der Stab 108 greift nicht mehr in die Nut 106 ein. Der Zylinder 102 dient folglich zur Trennung des Stellglieds 67 vom Tragarm 18, so daß dieser unbeeinflußt vom lineare Stellglied 67 manuell verschiebbar ist. Bei Handbetrieb befindet sich die Spindel 74 zweckmäßigerweise in ihrer Bereitschaftsposition.

Zum selbsttätigen Drehen des Masts 26 wird die Kupplung von der Steuereinheit 14 betätigt. Weiter ist ein optischer Winkelaufnehmer 100 am Mast 26 zur Bestimmung des Winkels oder der horizontalen Position befestigt. Der Winkelaufnehmer 100 liefert an die Steuereinheit 14 Informationen bezüglich der Winkelposition des Masts 26. Die Steuereinheit 14 benutzt diese zur definierten Steuerung des Motors 88, um den Arm16 zwischen ausgewählten Winkelpositionen zu bewegen. Im Handbetrieb ist die Kupplung gelöst.

Die Umschaltung vom Automatikbetrieb zum Handbetrieb kann durch die Bedienperson mittels eines Steuerschalters erfolgen oder aber er erfolgt automatisch, wenn der Tragarm 18 eine jeweils vorgegebene Position erreicht hat.

Bei Automatikbetrieb bewegt das Hebegerät beispielsweise ein Montageteil selbsttätig von einer Position zu einer anderen. Am Anfang befindet sich das Montageteil auf der Gabel 95 des Halterungs 38 in seiner Anfangsposition. Dann aktiviert die Steuereinrichtung 14 eine Kupplung um den Motor 88 zu betätigen, damit der Mast 26 und der Auslegerarm 16 zur vorgegebenen Winkelposition gedreht wird. Der Steuereinheit 14 trennt den Motor über die Lösung der Kupplung vom Mast 26, wenn dieser die ausgewählte Winkelposition erreicht hat. Die Steuereinheit 14 verfährt anschließend mit dem Stellglied 58 den ersten Auslegerarm 16 zu seiner ausgewählten vertikalen Position. Schließlich bewegt die Steuereinheit 14 über das Stellglied 67 den Tragarm 18 in die vorgewählte longitudinale Position. Schließlich schaltet die Steuereinheit 14 die Balanciereinheit 42 wieder und fährt die Stellglieder 58 und 67 wieder zurück in ihre Bereitschaftspositionen, um das Hebegerät weiter im Handbetrieb betreiben zu können. Eine Bedienperson kann dann die beiden Arme 16, 18 manuell vertikal und horizontal bewegen und um die Längsachse des Masts 26 drehen.

Bezugszeichenliste

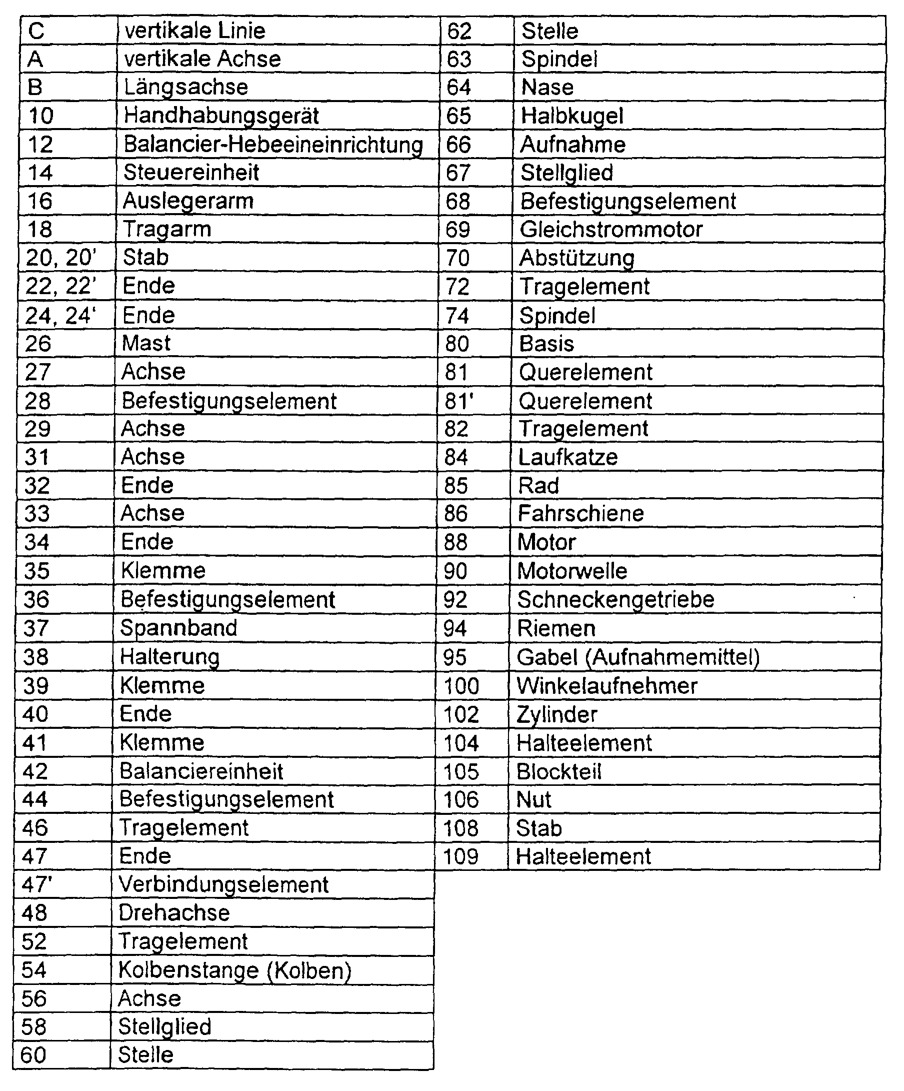

## Patentansprüche

1. Handhabungsgerät mit einem Mast (26), an dem ein um eine waagerechte Achse (27,29) schwenkbarer Auslegerarm (16) als erstes bewegbares Element zum Bewegen eines Aufnahmemittels (95) mit oder ohne Last zu einer gewünschten Position abgestützt ist, mit einer zwischen dem Mast und dem Auslegerarm angeordneten Balanciereinheit (42) zum Kompensieren von Eigengewichts- und Lastmomenten,
**dadurch gekennzeichnet,**
**daß** jedes zur Positionierung vorgesehene bewegbare Element (16, 18, 26) mittels mindestens eines mit diesem verbindbaren, von einer Steuereinheit (14) betätigbaren Stellgliedes (58, 67) selbsttätig zu einer jeweils vorgegebenen Position bewegbar und die kraftübertragende Verbindung zwischen dem Stellglied (58, 67) und dem Element (16, 18, 26) nach Erreichen der jeweils vorgegebenen Position zum manuellen Bewegen wieder lösbar ist.

2. Handhabungsgerät nach Anspruch 1,
**dadurch gekennzeichnet,**
**daß** als Verlängerung des Auslegerarms (16) drehfest an diesem abgestützt ein in Richtung seiner Längsachse (B) verschiebbarer Tragarm (18) mit dem Aufnahmemittel (95) für die Last als zweites bewegbares Element vorgesehen ist.

3. Handhabungsgerät nach einem der Ansprüche 1 oder 2,
**dadurch gekennzeichnet,**
**daß** der Mast (26) als drittes bewegbares Element mittels einer Drehlagerung um seine vertikale Längsachse (B) drehbar ist.

4. Handhabungsgerät nach einem der Ansprüche 1 - 3,
**dadurch gekennzeichnet,**
**daß** die Verbindungen von der Steuereinheit (14) lösbar sind.

5. Handhabungsgerät nach einem der Ansprüche 3 oder 4,
**dadurch gekennzeichnet,**
**daß** das Stellglied des dritten bewegbaren Elements (26) eine von einem Motor (88) über eine Kupplung angetriebene Drehvorrichtung umfaßt.

6. Handhabungsgerät nach einem der Ansprüche 1, 2 und 4,
**dadurch gekennzeichnet,**
**daß** die Stellglieder (58, 67) des Auslegerarms (16) und des Tragarms (18) als gleichstrombetriebene linear bewegbare Kugelumlaufspindel (63, 74) ausgebildet sind.

7. Handhabungsgerät nach einem der Ansprüche 1-6,
**dadurch gekennzeichnet,**
**daß** die Balanciereinheit (42) als Kolben-Zylinder-Einheit ausgebildet ist.

8. Handhabungsgerät nach Anspruch 7,
**dadurch gekennzeichnet**
**daß** die Kolben-Zylinder-Einheit druckgeregelt zur Aufrechterhaltung eines konstanten Zylinder-Innendrucks und damit eines konstanten zwischen dem Mast (26) und dem Auslegerarm (16) wirksamen Kraftmoments ist.

9. Handhabungsgerät nach einem der Anspruch 7-8,
**dadurch gekennzeichnet**
**daß** die Kugefumlaufspindef (63) und der Kolben (54) der Kolben-Zylinder-Einheit über ein Tragelement (52) miteinander verbunden sind, so daß der Kolben (54) über das Stellglied (58) in mindestens eine Richtung bewegbar ist.

10. Handhabungsgerät nach einem der Ansprüche 7-9,
**dadurch gekennzeichnet,**
**daß** der Kolben (54) der Kolben-Zylinder-Einheit über die Kugelumlaufspindel (63) vertikal nach oben bewegbar ist.

11. Handhabungsgerät nach einem der Ansprüche 6-10,
**dadurch gekennzeichnet,**
**daß** die Spindel (63) mit einem Ende (64) unter Bildung einer lösbaren Verbindung formschlüssig in eine komplementäre Aufnahme (66) des Tragelements (52) eingreifbar ist.

12. Handhabungsgerät nach Anspruch 11,
**dadurch gekennzeichnet,**
**daß** der Kolben (54) über die Spindel (63) nur vertikal nach oben bewegbar ist und daß der Auslegerarm (16) bei fehlender Abstützung (70) durch die Spindel (63) und bei ausgeschalteter Balanciereinheit (42) beim Handbetrieb jeweils langsam vertikal nach unten driftet.

## Claims

1. Manipulator having a pole (26) on which is supported an extension arm (16) , pivotable about a horizontal axis (27, 29), as the first moveable element to move a receiving means (95) with or without a load to a desired position, with a balancing mechanism (42) disposed between the pole and the extension arm to compensate for own weight and load moments,
**characterised in that**
each moveable element (16, 18, 26) provided for positioning can be automatically moved by means of at least one actuator (58, 67), which can be connected to said element and actuated by a control unit (14), to a respectively predetermined position and the energy-transmitting connection between the actuator (58, 67) and the element (16, 18, 26) can be disconnected again for manual movement once the respectively predetermined position has been reached.

2. Manipulator according to claim 1,
**characterised in that**
a carrying arm (18), which has the receiving means (95) for the load, is supported on the extension arm (16) as an elongation of same, so as to rotate with it, and is displaceable in the direction of its longitudinal axis (B), is provided as the second moveable element.

3. Manipulator according to one of claims 1 or 2,
**characterised in that**
the pole (26) can be rotated about its vertical longitudinal axis (B) by means of a rotary mounting, as the third moveable element.

4. Manipulator according to one of claims 1 to 3,
**characterised in that**
the connections can be disconnected from the control unit (14).

5. Manipulator according to one of claims 3 or 4,
**characterised in that**
the actuator of the third moveable element (26) includes a rotary device driven by a motor via a coupling.

6. Manipulator according to one of claims 1, 2 and 4,
**characterised in that**
the actuators (58, 67) of the extension arm (16) and of the carrying arm (18) are configured as circulating ball spindles (63, 74) which are operated by direct current and capable of linear movement.

7. Manipulator according to one of claims 1 to 6,
**characterised in that**
the balancing mechanism (42) is configured as a piston-cylinder unit.

8. Manipulator according to claim 7
**characterised in that**
the piston-cylinder unit is pressure-regulated to maintain a constant internal cylinder pressure and thus a constant moment of force effective between the pole (26) and the extension arm (16).

9. Manipulator according to one of claims 7 to 8,
**characterised in that**
the circulating ball spindle (63) and the piston (54) of the piston-cylinder unit are connected to one another via a support element (52), such that the piston (54) can be moved via the actuator (58) in at least one direction.

10. Manipulator according to one of claims 7 to 9,
**characterised in that**
the piston (54) of the piston-cylinder unit can be moved vertically upwards via the circulating ball spindle (63).

11. Manipulator according to one of claims 6 to 10,
**characterised in that**
the spindle (63) can engage with one end (64) in a complementary receiver (66) of the carrying element (52), forming a disconnectable connection.

12. Manipulator according to claim 11,
**characterised in that**
the piston (54) can be moved via the spindle (63) only vertically upwards, and **in that** the extension arm (16) drifts slowly vertically downwards if there is no support (70) from the spindle (63) and when the balancing mechanism (42) is switched off during manual operation.

## Revendications

1. Appareil de manipulation, comportant un mât (26), sur lequel s'appuie un bras en porte à faux (16), pouvant pivoter autour d'un axe horizontal (27, 29), comme premier élément mobile pour déplacer un moyen de réception (95) avec ou sans charge vers une position souhaitée, une unité d'équilibrage (42) agencée entre le mât et le bras en porte à faux pour compenser des moments de poids propre et de charge,
**caractérisé en ce que** chaque élément mobile (16, 18, 26) prévu pour le positionnement est déplaçable automatiquement vers une position à chaque fois prédéfinie au moyen d'au moins un organe de réglage (58, 67) pouvant être relié à celui-ci et pouvant être actionné par une unité de commande (14), et la liaison transmettant les forces entre l'organe de réglage (58, 67) et l'élément (16, 18, 26) peut être à nouveau débrayée après avoir atteint la position à chaque fois prédéfinie pour le déplacement manuel.

2. Appareil de manipulation selon la revendication 1,
**caractérisé en ce que**, comma prolongement du bras en porte à faux (16), appuyé de façon solidaire en rotation sur celui-ci, il est prévu un bras de support (18) déplaçable en direction de son axe longitudinal (B) avec le moyen de réception (95) pour la charge, comma second élément mobile.

3. Appareil de manipulation salon une des revendications 1 ou 2,
**caractérisé en ce que** le mât (26), comma troisième élément mobile, peut tourner au moyen d'un palier rotatif autour de son axe longitudinal vertical (B).

4. Appareil de manipulation salon une des revendications 1 - 3,
**caractérisé en ce que** les liaisons peuvent être débrayées par l'unité de commande (14).

5. Appareil de manipulation selon une des revendications 3 ou 4,
**caractérisé en ce que** l'organe de réglage du troisième élément mobile (26) comporte un dispositif rotatif entraîné par un moteur (88) par l'intermédiaire d'un accouplement.

6. Appareil de manipulation selon une des revendications 1, 2 et 4,
**caractérisé en ce que** les organes de réglage (58, 67) du bras en porte à faux (16) et du bras de support (18) sont réalisés comme vis à billes (63, 74) linéairement mobiles, entraînés par un courant continu.

7. Appareil de manipulation selon une des revendications 1 - 6,
**caractérisé en ce que** l'unité d'équilibrage (42) est réalisé comme vérin.

8. Appareil de manipulation selon la revendication 7,
**caractérisé en ce que** le vérin est réglé en pression pour maintenir une pression interne constante du cylindre et, ainsi, un moment de force efficace constant entre le mât (26) et le bras en porte à faux (16).

9. Appareil de manipulation selon une des revendications 7 - 8,
**caractérisé en ce que** la vis à billes (63) et le piston (54) du vérin sont reliés ensemble par un élément de support (52), de sorte que le piston (54) est déplaçable, par l'intermédiaire de l'organe de réglage (58), dans au moins une direction.

10. Appareil de manipulation selon une des revendications 7 - 9,
**caractérisé en ce que** le piston (54) du vérin est déplaçable verticalement vers le haut par l'intermédiaire de la vis à billes (63).

11. Appareil de manipulation selon une des revendications 6 - 10,
**caractérisé en ce que** la vis (63) peut s'engager, par une extrémité (64), en formant une liaison débrayable, par coopération de formes, dans un récepteur complémentaire (66) de l'élément de support (52).

12. Appareil de manipulation selon la revendication 11,
**caractérisé en ce que** le piston (54) est déplaçable uniquement verticalement vers le haut par la vis (63), et **en ce que** le bras en porte à faux (16), sans appui (70) par la vis (63) et lorsque l'unité d'équilibrage (42) est coupée, en fonctionnement manuel, dérive à chaque fois lentement verticalement vers le bas.
